# EUROPEAN PATENT APPLICATION

(11) **EP 1 698 593 A2**
(43) Date of publication of application: **06.09.2006**
(21) Application number: 06004166.2
(22) Date of filing: 02.03.2006
(51) Int. Cl.: C02F 1/30, C02F 9/04, C02F 9/12, C02F 9/14, E03F 11/00, C02F 1/00, C02F 3/28, C02F 3/30, C02F 1/52

(54) **Sewage treatment system for use in marine toilet and other remote toilets**

(30) Priority: 03.03.2005 US 72946; 27.02.2006 US 363028
(71) Applicant: Barreras, Francisco J., Surfside Florida, 33154 (US); Barreras, Daniel E., Miami Florida, 33126 (US)
(72) Inventor: Barreras, Francisco J., Surfside Florida, 33154 (US); Barreras, Daniel E., Miami Florida, 33126 (US)
(74) Representative: Schuhmann, Albrecht

(57) **Abstract**

The method for marine sewage treatment comprises the steps of (a) dispensing with each toilet flush a controlled amount of heterotrophic bacteria culture into the boat's holding tank in order to substantially denitrify the sewage and liquefy the solids, (b) pumping raw sewage from said holding tank to fill a radiation loop, (c) applying microwave energy for a predetermined duration to the raw sewage contained within said radiation loop in order to disinfect said sewage, and (d) passing the disinfected hot sewage through a phosphate filter to substantially reduce the phosphate level. The marine sewage treatment system comprises: a toilet, a connection from a water source to said toilet, a connection from a dispenser of heterotrophic bacteria culture to said toilet, a holding tank for toilet sewage having an inlet coupled to said toilet, a macerator pump having an inlet coupled to the outlet of said holding tank and an outlet coupled to the inlet of a radiation loop, a phosphate filter having an inlet connected to the outlet of said radiation loop, an effluent discharge pump having an inlet coupled to the outlet of the phosphate filter and an outlet coupled to an effluent discharge opening to the sea and structure for applying microwave energy to said radiation loop to substantially disinfect and heat the waste water effluent in said radiation loop before filtering out the phosphates and discharging the treated effluent into the sea.

## Description

### BACKGROUND OF THE INVENTION

### 1. Field of the Invention.

The present invention relates to a compact, unattended and cost-effective sewage treatment system (STS) adapted to be installed and used aboard boats and in other remote toilet facilities where a conventional sewer system is not available. The system attains 100% microbial inactivation rate without the use of chemicals, salts, electric heaters, ultraviolet radiation or incineration. Unlike prior art systems, the system of the present invention operates totally unattended and automatically, doesn't require any mechanical maintenance or cleaning other than periodic replacement of a phosphate filter and refilling of a denitrifying dispenser. The system also incorporates a full array of fault detection and diagnostic display. In case of a critical component failure, the system of the present invention will identify the failed component and will automatically shut down to prevent overboard discharge of untreated sewage into the waters surrounding the vessel. Likewise, when the phosphate filter media becomes saturated or the denitrifying dispenser is empty, the sewage treatment system will automatically shut down to prevent overboard discharge of untreated sewage. During shut down the toilet will continue to operate and discharge into the boat's holding tank which will have to be emptied into a conventional pump-out station until the STS is serviced.

### 2. Description of the Related Art.

Marine Sanitation Devices (MSD) for boats have been developed to either (A) disinfect the sewage while it is contained within a holding tank or (B) to disinfect the sewage flushed out of a toilet before it is pumped overboard. Some type "A" MSDs require the manual loading of chemicals like formaldehyde, or waste-digesting enzymes, or biological additives or disinfectants like chlorine. Those using waste-digesting enzymes require a long digestion period to achieve a meaningful reduction of bacteria levels. Effectiveness of type "A" MSDs requiring human intervention are unpredictable and unreliable because they depend on the timely and accurate loading of specific additives into the sewage and accurately awaiting the proper digestion period before discharging overboard the contents of the holding tank. The effectiveness of type "B" MSDs are also unreliable and unpredictable, because their effectiveness depends on periodic mechanical maintenance tasks, such as cleaning or replacing electrolyzing electrodes, or cleaning or replacing ultraviolet light bulbs. If these maintenance tasks are not carried out in a timely and professional fashion, an ineffective sewage treatment system may go unnoticed for long periods of time allowing dangerous levels of live bacterial and viral organisms to be discharged overboard. In summary, prior marine MSDs share some of the disadvantages described above. The long term effectiveness of some of the prior art MSDs is compromised by either (1) their need for periodic and professional maintenance and cleaning, (2) because they lack the capability of automatic unattended operation, or (3) because they lack systems monitoring, fault diagnostic and automatic shut down capabilities.

For example, U. S. Patent No. 4,516, 281 to McPherson, et al. describes a type B treatment system where final disinfection is carried out in a chlorination tank, thereby requiring human intervention to fill the chlorine tank.

U.S. Patent No. 6,207,047 to Gotheaux, describes a type B treatment system where the raw sewage comes in contact with porous media inoculated with nitrifying aerobic bacteria which requires human intervention to replenish the disinfecting media.

U.S. Patent No. 5,433,842 to Morris, et al. describes a type a sewage treatment system where the sewage in a holding tank is heated above the level at which coliform bacteria can't survive. A water conduit supplies heated water from the vessel's engine through the holding tank to heat the sewage. An electrically operated heating element is also mounted in the tank to be used when the engine is off. This system is very inefficient because after the sewage reaches the inactivation temperature and presumably all bacteria has been killed, if a fresh charge of raw sewage material is received before the disinfected material is discharged overboard, the entire tank contents becomes contaminated and cooled again, requiring additional power to again disinfect the tank contents.

U.S. Patent No. 4,009,104 to Behrendt, et al. describes a type B sewage treatment system comprising an electrolytic cell which converts the sodium chloride to form sodium hypochlorite by passing an electric current between a set of electrodes. There are two main disadvantages to this system: (1) the electrodes need to be cleaned periodically or they will loose their effectiveness and worse, the system doesn't make the user aware when the electrodes need cleaning, and (2) the sodium hypochlorite contents of the disinfected sewage overboard discharge is toxic to sea organism within close proximity to the vessel.

All prior art MSDs including the ones referenced above can create a false sense of security. The EPA standard for the best performing MSD (a Type II) allows a discharge of 200 fecal coliform per 100 ml, and the worst performing MSD (a Type I) allows a discharge of 1,000 fecal coliform per 100 ml. Furthermore, the EPA requirements for MSDs doesn't include standards for other, more harmful pathogens found in natural abundance in human feces, such as Enterococcus and E. Coli. Coliform bacteria do not usually cause disease. However, their presence indicates that pathogenic (disease-causing) organisms could be present such as Enterococcus and E. Coli. For health safety reasons, the effluent standard for all marine sanitation devices (MSD) should be changed from testing for Coliform to testing for E. Coli or Heterococcus.

Furthermore, these prior art MSDs only achieve partial disinfection of the human waste prior to overboard discharging into the sea, rivers and lakes, and do nothing to eliminate or reduce other critical pollutants normally found in human waste, such as nitrates and phosphates. If these pollutants find their way into our groundwater supply of drinking water they can be very harmful to humans. Nitrates are an unstable form of nitrogen formed during the decomposition of waste materials, such as human sewage. If infants less than six months of age drink water (or formula made with water) that contains more than 10 mg/L nitrate nitrogen, they are susceptible to methemoglobinemia or blue baby syndrome. This disease interferes with the blood's ability to carry oxygen. Recent studies also suggest that high nitrate water may be linked to birth defects and miscarriages, so pregnant women should avoid drinking high nitrate water.

In aquatic ecosystems such as coral reefs, nitrates and phosphates are nutrients that can cause diverse problems such as toxic algal blooms and a corresponding loss of oxygen, resulting in fish kills, loss of biodiversity (including species important for commerce and recreation), and damage to sea grass beds and reef habitats.

Obviously, treatment and disposal of sewage effluent into the environment is a major problem today. In the marine environment, federal laws prohibiting overboard discharge of raw sewage inside a three mile coastal limit are often disregarded by boaters. Still today, a large number of U. S. marinas (private and municipal) have no pump-out facilities. Many boaters are unwilling to untie their boat from the marina slip, mooring or anchor and travel three miles just to empty their holding tanks. Sometimes unsettled weather prevents them from making this trip and with a full holding tank, they have no choice but to discharge overboard the contents of their holding tank. The U. S. Coast Guard, Marine Patrol and Harbor Police have inadequate manpower to enforce antidumping laws inside the three mile limit, and even when they try, it is very difficult to determine which boat in the marina or harbor is the offending one. The result is that pollution of the waters in our harbors, anchorages and marinas continues to increase at an exponential rate. Due to the poor performance of prior art marine sanitation devices (MSD) which still discharge a significant count of Coliform (between 200 and 1,000 Coliform per 100 ml), many states have designated large bodies of water, both fresh and salt water, a "no discharge zone" (NDZ) in which overboard discharging is not allowed even when the boat's sewage was treated with a U. S. Coast Guard approved Type I or Type II MSD. Boats navigating a no discharge zone are required to retain sewage in their holding tanks until they are able to transfer the sewage to a land based pump-out station. However, evidence shows that no discharge zones don't protect the environment because there aren't enough *operating* pump-out systems to satisfy the need of the boating public. Because the boating public finds it is impossible to comply, most boaters navigating a NDZ simply ignore the law and discharge raw sewage overboard. For example, the effectiveness of Rhode Island's NDZ was tested by Cruising World magazine and reported in their May 2001 issue. In September 1997 Rhode Island declared all of its waters -more than 244 square miles- a no discharge zone. Cruising World investigators navigating these waters in the spring of 2001 were totally unable to have the sewage in their holding tank -a week's worth of sewage- pumped-out at any shore side facility. Similar stories can be heard regarding other NDZ at other states across the nation.

Therefore, there is an obvious need for an onboard, compact, unattended and cost effective marine sewage treatment system producing a discharge effluent which meets or exceeds the *drinking water standards* set by the U. S. Environmental Protection Agency (EPA) for Coliform, E. Coli, Enterococcus, Nitrates, Nitrites, and Phosphates, and that also meets or exceeds the effluent standards set by the EPA for a modern, municipal sewage treatment plant for biochemical oxygen demand (BOD₅) and total suspended solids (TSS).

While the use of microwave energy in a device for sterilizing food products or medical biological waste has been proposed, direct treatment of marine or municipal sewage with microwave energy to disinfect same has not heretofore been proposed.

### BRIEF SUMMARY OF THE DISCLOSED EMBODIMENT

The efficient, unattended and cost-effective marine sewage treatment system of the present invention overcomes the disadvantages of the prior systems described above by providing a system that does not require a periodic mechanical maintenance/cleaning schedule, by providing a system for detecting and identifying malfunctioning components within the system, by providing a system capable of 100 % bacterial deactivation, by reducing nitrates and phosphates to levels below EPA standards for *drinking water,* and by producing an effluent having a BOD₅ that is close to zero and a TSS that is half of the best Type II MDS. In other words, in terms of contents of bacteria, nitrates and phosphates, the effluent discharged by the system of the present invention will have the same environmental impact on the sea (or lake or river) as would discharging the same amount of the clean water from your home faucet. The system of the present invention is also capable of automatically shutting down the disinfection system if a critical component fails, or when the nitrate or phosphate reducing media has been consumed, therefore preventing the accidental overboard discharge of untreated sewage into the waters surrounding the vessel.

In one preferred embodiment of the system of the present invention, which can be used in vessels with single or multiple toilet facilities, the system comprises the following major components: (a) an electrically operated toilet, (b) an automatic dispenser of denitrifying and liquefying media, (c) a conventional sewage holding tank such as the one normally installed in most medium and large size boats, (d) a "full" level sensor deployed inside said holing tank, (e) an "empty" level sensor deployed inside said holding tank, (f) a microwave resonant cavity containing a series of undulating tubes forming a radiation loop through which the sewage flows during the disinfection cycle, (g) a microwave generator utilized to radiate microwave energy into the resonant cavity, (h) a macerator pump utilized to fragment human waste solids into much smaller pieces and for pumping raw sewage into a radiation loop, (i) a first vented loop plumbed between the outlet of the holding tank and the inlet of a radiation loop which is utilized for preventing cross contamination between the infected sewage in the holding tank and the disinfected sewage in the radiation loop even as the boat rolls in a seaway, (j) a first flow sensor to detect a faulty macerator pump, (k) a radiation sensor which is utilized to detect a malfunctioning microwave generator, (I) a self-priming effluent discharge pump utilized for overboard discharge of the disinfected sewage, (m) a second flow sensor to detect a faulty effluent discharge pump, and (n) an electrical controller and display panel utilized to control activation of the different parts of the system, to alert the user and automatically shut down the marine sewage treatment system when a particular treatment media has run out or when a critical component fails to operate properly therefore preventing accidental overboard discharge of contaminated sewage.

It is one objective of the system of the present invention to provide a marine sewage treatment system capable of producing a treated effluent having zero (0) fecal Coliform, zero total Coliform, and zero E. Coli or Enterococcus.

It is another objective of the system of the present invention to provide a marine sewage treatment system capable of automatic unattended operation and without periodic mechanical maintenance or cleaning.

It is a further objective of the system of the present invention to provide a total sewage treatment system that not only thoroughly disinfects the sewage, but that also reduces other harmful pollutants, such as nitrates, nitrites and phosphates to levels significantly below the EPA standards for drinking water.

It is an additional objective of the system of the present invention to provide a marine sewage treatment system capable of producing a thoroughly disinfected effluent with a BOD₅ significantly below the EPA standards for modern large scale municipal sewage treatment plants.

It is another objective of the system of the present invention to provide a marine sewage treatment system incorporating a self-diagnostic automatic shut down system to prevent accidental overboard discharge of contaminated sewage.

It is a final objective of the system of the present invention to provide a marine sewage treatment system capable of producing a treated effluent containing less than 500 parts per 100 milliliters of Total Suspended Solids (a 50 % reduction relative to the best MSD in the market).

### BRIEF DESCRIPTION OF THE SEVERAL VIEWS OF THE DRAWINGS

FIG. 1 is a graphic representation of a sewage disinfection system intended for use in vessels having one or more toilet facilities.

FIG. 2 is a block diagram of the controller utilized to (1) manage the activation of the different components of the sewage disinfection system shown in FIG. 1, and (2) detect and display any detrimental faults and automatically revert the system to "holding tank only" operation (no overboard discharge) in order to prevent accidental overboard discharge of contaminated sewage.

FIG. 3 is a perspective view of an undulating radiation loop used in the system illustrated in FIG. I.

### DETAILED DESCRIPTION OF THE ILLUSTRATED EMBODIMENT

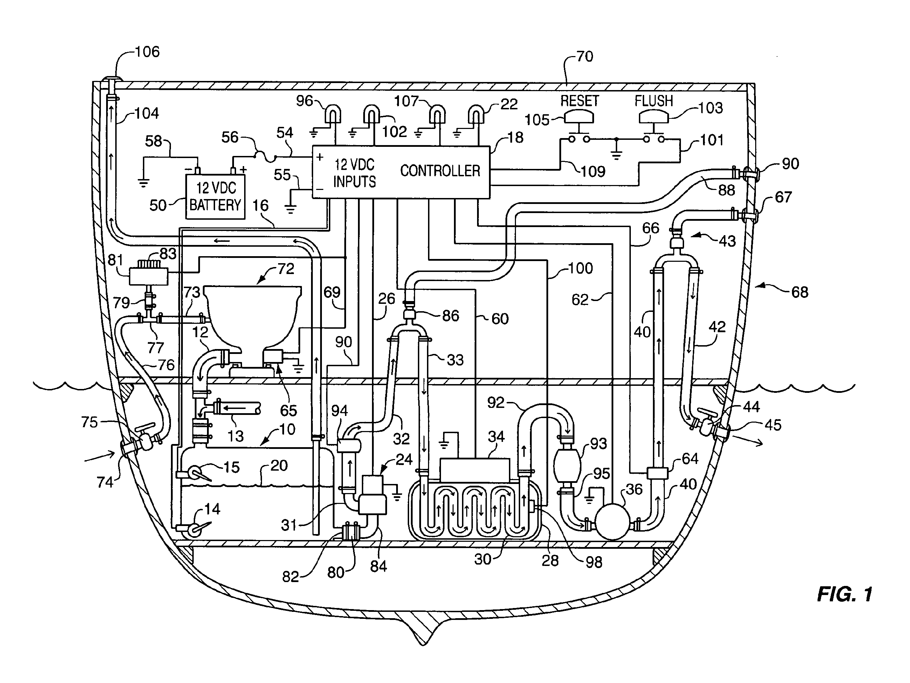

Referring now to FIG. 1, the sewage treatment system or process of the present invention comprises four sequential cycles: The 1 st cycle comprises the steps of dispensing a controlled amount of denitrifying and liquefying bacteria culture into a holding tank containing the wastewater to be treated and allowing a dwell time of at least one day before initiating cycles 2, 3 and 4. The 2nd cycle comprises the steps of macerating and filling a radiation pipe loop with wastewater. The 3rd cycle comprises the step of disinfecting the wastewater with microwave radiation. The 4th cycle comprises the steps of reducing the phosphate level of the disinfected wastewater and discharging overboard the treated effluent.

Referring to FIG. 1, a first stage of the sewage treatment system of the present invention comprises an electric toilet 72, a dispenser 81 for dispensing denitrifying and liquefying media into the toilet flush water and a holding tank 10 into which the effluent from various toilets is discharged through sanitation hoses 12 and 13. The denitrifying media is a specialized blend of heterotrophic bacterial culture which substantially converts harmful nitrates and nitrites found in human waste into harmless nitrogen gas and also liquefies the solids and digests the toilet paper.

The 1^{st} treatment cycle (the denitrifying and liquefying cycle) is initiated by depressing the "flush" push button 103 which momentarily turns on the toilet's motor to draw flush water into the toilet and also triggers "dispenser" 81 to dispense a controlled amount of heterotrophic bacteria into the flush water being mixed with human waste and deposit the resulting wastewater into the holding tank for a typical dwell time of several days. As an example, let's assume that the holding tank has a capacity of only 40 gallons and let's assume that each flush produces a mix of water and waste equivalent to about 0.5 gallons. Let's also assume that the boat crew comprises four persons, each person flushing the toilet about three times per day. The math tells us that the holding tank will be near a full condition in about 6 days (0.5 gallons X 3 flushes X 4 persons = 6 gallons of sewage per day, and a 40 gallon tank divided 6 gallons per day = 6.67 days). This will be more than enough time for the heterotrophic bacteria to substantially denitrify, digest the toilet paper and liquefy the solids.

Next the "Full" level sensor 15 initiates the 2^{nd} treatment cycle (the macerating and filling cycle) by signaling controller 18 (via a cable 71) that holding tank 10 is near a full condition. This causes controller 18 to turn on a green "sewage treatment" light 22 and activate a macerator pump 24 (via a line 26) for a predetermined duration, e.g., 10 seconds to 2 minutes, thus injecting a predetermined batch of contaminated sewage into a microwave radiation loop 30 which is made from radiation transparent material, such as CPVC, high density polyethylene, polypropylene or silicon rubber.

Next, the controller 18 stops the macerator pump 24 and the subsequent pressure drop causes vented loop 86 to allow air to enter hoses 32 and 41, therefore any contaminated sewage remaining in sanitation hose 32 will fall by gravity back into holding tank 10 for further denitrifying and liquefying, thus ensuring a physical air space separation between the contaminated sewage at holding tank 10 and the sewage just injected into the radiation loop 30 which is to be disinfected in the next cycle.

Next the 3^{rd} treatment cycle (the disinfection cycle) is initiated by controller 18 activating a microwave generator 34 for a predetermined duration, e.g., 3 to 8 minutes, preferably 5 minutes, in order to disinfect the sewage contained within radiation loop 30. The micro-wave generator is operated to produce microwave radiation with a frequency between I and 5 GHz. Next the 4^{th} treatment cycle (the phosphate reduction and overboard discharge cycle) is initiated by the controller 18 turning on an effluent pump 36 for a predetermined duration to evacuate the disinfected sewage within radiation loop 30 and discharge it overboard via hoses 41 and 42, seacock 44 and throughhull 45. During this overboard discharge process the hot disinfected sewage is forced through phosphate filter 93 which is filled with iron powder to substantially reduce the phosphate level of the effluent before overboard discharge.

Controller 18 will continue to repeat the sequential sewage treatment cycles 2, 3 and 4 many times until the "empty" level sensor 14 is activated indicating that all of the sewage in holding tank 10 has been fully treated and discharged overboard.

Effluent pump 36 is a self-priming, bellows type pump capable of pumping dry the entire disinfected sewage out of the radiation loop 30. A conventional 12 VDC battery 50 powers the sewage disinfection system of FIG. I via input lines 54 and 55, a fuse 56 and a ground connection 58. The controller 18 powers the microwave generator via a line 60. The controller 18 powers the effluent pump 36 via a line 62. The controller 18 monitors the output of a flow sensor 64 via line 66. A throughhull 67 provides outside venting for vented loop 43 to prevent foul odors from reaching the interior of the vessel's cabin and also to prevent siphoning of seawater into the radiation loop and holding tank.

The entire sewage treatment system is contained within the vessel's hull 68 and deck 70. Sea water for flushing is pumped in by toilet 72 into its bowl via a throughhull 74, seacock 75 and a hose 76. This flushing sea water is mixed with the human waste and the denitrifying media and discharged into the holding tank 10 via sanitation hose 12 and holding tank inlet 78. The sanitation hose 13 brings additional human waste and denitrifying media from other toilets within the vessel. A sanitation hose 80 connects an outlet 82 of holding tank 10 to an inlet 84 of macerator pump 24. A sanitation hose 32 connects an outlet 31 of macerator pump 24 to an inlet of vented loop 86. A sanitation hose 33 connects an outlet of vented loop 86 to an inlet of radiation loop 30. A sanitation hose 92 connects an outlet of the radiation loop 30 to an inlet of phosphate filter 93. A sanitation hose 95 connects an outlet of phosphate filter 93 to an inlet of effluent pump 36. A sanitation hose 40 connects an outlet of effluent pump 36 to an inlet of vented loop 43. A sanitation hose 42 connects an outlet of vented loop 43 to an inlet of seacock 44 and throughhull 45.

A flow sensor 94 is utilized to detect any malfunction of the macerator pump 24. A line 90 signals the controller 18 of a low flow condition which causes the controller 18 to turn on a red light 96 to alert the user of the need to repair or replace the macerator pump 24.

A radiation sensor 98 is utilized to monitor the microwave field strength during the disinfection cycle in order to detect any fault in the operation of the microwave generator 34. If the field strength doesn't rise above a predetermined value, a line 100 signals the controller 18 of this abnormal condition, causing the controller 18 to turn on a "disinfection fault" light 102 to alert the user of a faulty microwave generator 34. In this case the sewage treatment system shown in FIG. 1 will be shut down and revert to "holding tank only" operation to prevent overboard discharge of contaminated sewage. In such a situation, the holding tank 10 must be pumped out via a sanitation hose 104 through a deck plate 106. After the microwave generator 34 is repaired, pushing a reset button 105 will restore normal operation of the system.

The flow sensor 64 is utilized to detect a faulty effluent pump 36 by detecting an inadequate flow. In this case the controller 18 will (a) alert the user of a faulty effluent pump 36 by turning on a "pump-out fault" red light 107, and (b) shut down the sewage treatment system until the effluent pump 36 is repaired or replaced. During this shut down state, the holding tank 10 must be pumped out via the sanitation hose 104 through the deck plate 106. After the waste pump 36 is repaired or replaced, pushing the reset button 105 restores normal operation of the sewage disinfecting system shown in FIG. 1.

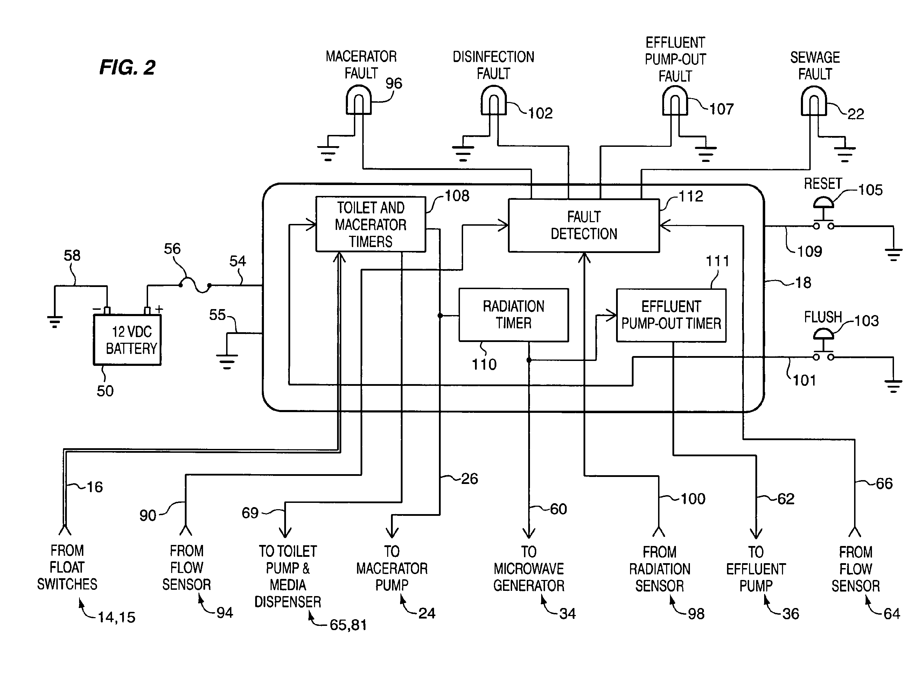

Referring now to FIG. 2, flushing of the toilet is initiated by pressing the "flush" push button 103 which triggers a toilet timer 108 (via line 101), turns on a toilet pump 65 (via line 69) for a predetermined duration and triggers a media dispenser 81 to inject a controlled amount of denitrifying/liquefying bacterial culture into the flush water. This denitrifying/liquefying media is a specialized blend of heterotrophic bacterial culture which substantially converts harmful nitrates and nitrites found in human waste into harmless nitrogen gas and also liquefies the solids and digests the toilet paper. Each time the flush push button 103 is pressed additional denitrifying/liquefying media is injected into the flush water and is deposited into a holding tank 10, thus ensuring that enough heterotrophic bacteria is always present inside holding tank 10. Typically the bacteria will be in contact with the raw sewage for several days (actual time depends on the capacity of holding tank 10), resulting in substantial denitrifying, decomposition of solids and digestion of the toilet paper.

Referring again to FIG. 2, a sewage treatment cycle is initiated upon controller 18 receiving a signal via line 16 from the "full" level sensor 15 indicating that the raw sewage at holding tank 10 is nearing a "full" level. This triggers a macerator timer 108 in the controller 18 to run (via line 26) the macerator pump 24 for a predetermined duration. Upon completion of the macerating/pump cycle, line 26 will turn off the macerator pump 24 and then trigger a radiation timer 110 in controller 18 to activate (via line 60) the microwave generator 34 for a predetermined duration. Then, upon completion of the radiation cycle, line 60 will trigger an effluent pump timer 111 in the controller 18 to activate the effluent pump 36 (via line 62) for a predetermined duration. Note that the waste pump 36 is a self-priming bellows type pump which can run dry without damage. Momentary reset switch 105 is used to get the treatment system out of the shut-down mode after a fault has been detected and servicing has been completed.

The conventional 12 VDC battery 50 is used to power the sewage disinfection system of FIG. 1. The conventional fuse 56 is used to protect the electronics within the sewage treatment system shown in FIG. I and the ship's electrical system.

A fault detection block 112 receives fault signals from flow sensors 94 and 64 and radiation sensor 98 and turns on the respective red lights 96, 102 and/or 107 to alert the user of specific faulty condition(s).

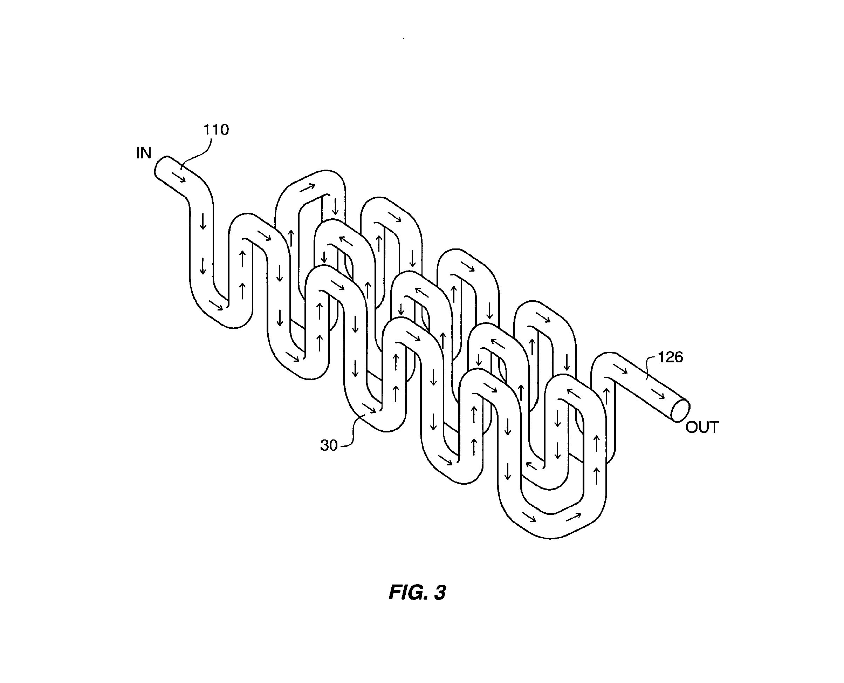

Referring to FIG. 3, a perspective view of the "radiation loop" 30 of tubing or pipe 30 is shown. This "radiation loop" 30 is made from radiation absorbing pipe material as to allow the radiation to penetrate the sewage within, and has an internal diameter not exceeding the effective penetration of microwaves into the sewage (about 2 inches). CPVC and silicone tubing work very well, although high density polyethylene and polypropylene tubing also can be used. The internal diameter of the pipe or tubing 30 is between I and 3 inches and, preferably, approximately 2 inches. The wall thickness of the tubing is between 0.03 inch and 0.25 inch, depending on the tubing material selected. Infected sewage enters through inlet 115, flows though loop 30 and the disinfected sewage exits through an outlet 126. The "radiation loop" 30 is formed so that it travels up-and-down and back-and-forth to cover as much of the interior volume within "resonant cavity" 28 as possible. The undulating or twisting pattern effectively results in an extremely long radiation pipe, permitting each batch of infected sewage to receive the same average dose of microwave radiation to be applied evenly as the sewage moves between spots of higher and lower field strengths within the "resonant cavity" 28. Tests conducted by independent testing laboratories have shown that 100% bacterial inactivation is obtained with microwave treatment of raw sewage and with the sewage reaching a maximum temperature of only 60° C. It is to be noted that prior art electrical and microwave sewage heaters and incinerators heat the sewage to over 100°C in order to obtain 100% bacterial inactivation.

From the foregoing description, it will be apparent that the marine sewage treatment system and method of the present invention have a number of advantages some of which have been described above and others of which are adherent in the invention.

For example:
Microwave energy is used to totally disinfect human fecal and urine waste without the waste having to reach the so called bacterial inactivation temperature of 100°C. Empirical tests have obtained 100% bacterial inactivation with the waste only reaching 60° C while prior art devices using electric heaters and incinerators heat the waste to temperatures much higher than 100°C.
Microwave energy is used as a disinfecting medium in order to design a completely unattended sewage disinfection apparatus. All prior art systems require user intervention to perform either periodic mechanical maintenance to clean/replace ultraviolet bulbs or to clean/replace electrolyzing electrodes or to periodically load chlorine tablets or formaldehyde.

A loop of radiation absorbing tubing is used inside a microwave resonant cavity where the waste to be disinfected within the tubing having a diameter not exceeding the effective penetration of microwaves into water in the tubing. This concept produces a surprisingly improved absorption rate of microwaves by the waste, resulting in a much shorter disinfection cycle.

The purpose of forming the tubing for the radiation loop 30 is so that the waste travels up-and-down and back-and-forth to cover as much of the interior volume of the resonant cavity 28 as possible. This concept results in an extremely long radiation tubing or pipe, permitting each batch of waste to receive an equally average dose of radiation as the waste moves between spots of higher and lower radiation field strengths levels within the resonant cavity.

The purpose of an air space between the infected raw sewage in the holding tank 10 and the disinfected waste in the radiation loop 30 is to inhibit cross contamination. This concept ensures that the waste being disinfected will not be contaminated with the raw waste in the holding tank. Note that the hose 32 and vented loop 86 are located much above the top surface of the holding tank 10, therefore preventing movement of the vessel from spilling raw waste into the inlet of radiation loop 30 and contaminating the waste being disinfected within the radiation loop 30.

The use of a "full" level sensor 15 to trigger a series of disinfection and phosphate reducing cycles to treat the entire contents of a "full" holding tank, instead of the disinfecting each toilet flush immediately and independently as the in prior art, allows the denitrifying/liquefying media dispensed into the holding tank with each flush, to be in contact with the raw sewage for several days before the disinfection and pump-out cycle begins. This long contact time between the media and the sewage results in substantial reduction of nitrates and a thorough breakdown of solids and toilet paper.

The disinfection of wastewater in small batches having a volume smaller than the total volume of the radiation loop 30, allows each batch to receive multiple radiation doses as it moves through the radiation loop 30, thereby ensuring 100% bacterial and viral inactivation of the waste exiting the radiation loop 30.

The stepped or indexed pushing along of hot waste water through the phosphate filter results in relatively long dwell time with the iron power media, thereby improving the level of phosphate reduction.

The use of appropriate sensors to detect critical component failures, allows to diagnose and identify the faulty component to the user and to shut down the sewage treatment in order to prevent accidental overboard discharge of infected sewage.

Also it will be understood that modifications can be made to the marine toilet method, system and apparatus of the present invention without departing from the teachings of the invention.

Accordingly, the scope of the invention is only to be limited as necessitated by the accompanying claims.

## Claims

1. A marine sewage treatment system comprising: a toilet, a connection from a water source to the toilet, a holding tank for toilet sewage having an inlet coupled to the toilet, a conduit having an inlet coupled to an outlet of the holding tank and an outlet coupled to an effluent discharge opening to the sea, **characterized by** mechanism for applying micro-wave energy to the conduit forming a radiation loop to substantially disinfect the sewage water in the conduit before discharging the waste water effluent into the sea.

2. A marine sewage treatment system comprising: a toilet, a connection from a water source to the toilet, a holding tank for toilet sewage having an inlet coupled to the toilet, a conduit having an inlet coupled to an outlet of the holding tank and an outlet coupled to an effluent discharge opening to the sea, a mechanism for disinfecting the sewage in a disinfection cycle, **characterized by** including an automatic dispenser for dispensing denitrifying/liquefying media into said holding tank, said dispensing being activated by flushing a toilet and each toilet flush dispensing an equal and controlled amount of said media, thereby initiating a first sewage treatment cycle of reducing nitrate levels, breaking down larger solids into smaller particles and digesting toilet paper.

3. A marine sewage treatment system comprising: a toilet, a connection from a water source to the toilet, a holding tank for toilet sewage having an inlet coupled to the toilet, a conduit having an inlet coupled to an outlet of the holding tank and an outlet coupled to an effluent discharge opening to the sea, a mechanism for disinfecting the sewage in a disinfection cycle, **characterized by** including a vessel containing a phosphate reducing media in a path of the sewage flow after disinfection which is effectively connected between an outlet of said conduit and a discharge opening into the sea.

4. The marine sewage treatment system of claim 1, 2 or 3 **characterized in that** a vented loop is positioned above said holding tank and is effectively connected between said outlet of said holding tank and said inlet of said conduit so that an air space is created between the toilet sewage in said holding tank and the disinfected sewage in said conduit to ensure that the sewage being disinfected will not be contaminated with the toilet sewage in said holding tank, even during swaying movement of a vessel mounting said marine sewage treatment system.

5. The marine sewage treatment system of claim 1 **characterized in that** said conduit includes an undulating winding loop of pipe or tubing having an inlet end and an outlet end, said pipe having a diameter of two inches or less in order not to exceed the effective penetration of microwaves in water which enables a fast and thorough penetration of micro-waves into the infected sewage flowing through said pipe, thereby significantly reducing the duration of the disinfection cycle.

6. The marine sewage treatment system of any one of claims 1-5 **characterized by** including an effluent pump coupled between an outlet of said conduit and a discharge opening into the sea and utilized for evacuating the disinfected sewage from said conduit and for discharging overboard the treated and disinfected effluent.

7. The marine sewage treatment system of any one of claims 1-6 **characterized by** including a macerator pump connected between said outlet of said holding tank and said inlet of said conduit, said macerator pump being utilized for comminuting larger sewage solids into smaller particles and for loading a batch of sewage into said conduit for disinfection.

8. The marine sewage treatment system of any one of claims I-7 **characterized by** including a microwave resonant cavity in which said conduit is disposed and a microwave generator associated with said microwave resonant cavity for treating the infected sewage with micro-wave energy having a frequency between 1 and 5 GHZ to substantially disinfect the sewage before dispersing such disinfected sewage effluent into the sea.

9. The marine sewage treatment system of claim 8 **characterized in that** said microwave generator is operated so that said infected effluent sewage is only heated to a temperature of approximately 60° C.

10. The marine sewage treatment system of any one of claims 8 or 9 **characterized by** further comprising electric control circuitry including a controller coupled to a float switch in said holding tank, said controller, upon receiving a signal from said float switch indicating a predetermined high level of sewage in said holding tank, being operable to initiate a disinfection cycle by triggering a macerator timer in said controller to run a macerator pump associated with said macerator for a predetermined duration followed by triggering a radiation timer in said controller to activate said microwave generator for a predetermined duration during a radiation cycle, and, upon completion of the radiation cycle, triggering an effluent pump timer in said controller to activate for a predetermined duration an effluent pump coupled between the outlet of said conduit and the inlet of said effluent pump.

11. The marine sewage treatment system of claim of claim 10 **characterized in that** said conduit comprises an undulating radiation loop of tubing which extends up and down and back and forth so that the sewage travels up-and-down and back-and-forth to cover as much of the interior volume of said resonant cavity resulting in an very long radiation tubing or pipe, thereby substantially increasing the volume of each batch of sewage to be disinfected by micro-wave radiation.

12. The marine sewage treatment system of any one of claims I-6 including a float switch in said holding tank coupled to a controller for controlling operation of said marine treatment system by initiating a series of sewage disinfection cycles, when a predetermined high level of sewage is detected in said holding tank thereby to allow a boat manufacturer to install a much smaller holding tank in a boat than with previous marine sewage treatment systems.

13. The marine sewage treatment system of any one of claims I-6 **characterized by** including a float switch in said holding tank coupled to a controller for controlling operation of said marine treatment system by terminating a series of sewage disinfection cycles, when a predetermined low level of sewage is detected in said holding tank.

14. The marine sewage treatment system of any one of claims 1-5 **characterized in that** the toilet sewage in said holding tank is split by an electronic circuit or controller into a series of individual batches to be disinfected, each batch having an equal volume which is slightly smaller than the total volume of said conduit and each batch being independently disinfected with micro-wave energy, each batch being sequentially indexed or stepped through said conduit by at least first and second sequential pumps, said first pump being operated to fill said conduit and the second pump being operated to evacuate said conduit after each batch has completed the radiation cycle, thereby preventing cross-contamination between sequential batches and insuring 100% bacterial and viral inactivation of the waste water exiting said conduit.

15. The marine sewage treatment system of claim 14 **characterized in that** said system also includes monitoring sensors throughout the system including a high level sensor in said holding tank and electrically coupled to said controller, a low level sensor in said holding tank and electrically coupled to said controller, a radiation sensor mounted on said undulating tubing and electrically coupled to said controller, a 1^{st} flow sensor positioned between said macerator and said conduit and electrically coupled to said controller, and a 2^{nd} flow sensor positioned between an effluent pump defining said second pump and said discharge opening to the sea and electrically coupled to said controller.

16. The marine sewage treatment system of claims 14-15 **characterized in that** said monitoring sensors are utilized by said controller for controlling the operation of said sewage treatment system by initiating microwave disinfection of the entire sewage in said holding tank when a predetermined high level of sewage is detected in said holding tank and terminating said sewage microwave disinfection when a predetermined low level of sewage is detected in said holding tank, for monitoring performance of critical components of said marine sewage treatment system, to detect critical component failures, to diagnose and identify the faulty component to the user and to shut down the entire sewage treatment system if the failed component results in ineffective disinfection in order to prevent overboard discharge of infected sewage, for providing visual and audible signals upon the occurrence of such a failure, and for providing visual and audible signals when is time to refill the dispenser of denitrifying media and/or replace the vessel containing phosphate reducing media.

17. A method for treating sewage in a marine sewage treatment system including a toilet, a connection from a water source to the toilet, a holding tank for sewage having an inlet coupled to the toilet, a conduit having an inlet coupled to an outlet of said holding tank and an outlet coupled to an effluent discharge opening to the sea, **characterized by** said method comprising the step of applying microwave energy to the conduit in a disinfection cycle to substantially disinfect the sewage in the conduit before discharging the disinfected effluent into the sea.

18. A method for treating sewage in a marine sewage treatment system including a toilet, a connection from a water source to the toilet, a holding tank for sewage having an inlet coupled to the toilet, a conduit having an inlet coupled to an outlet of said holding tank and an outlet coupled to an effluent discharge opening to the sea, and a mechanism for disinfecting the sewage in a disinfection cycle, **characterized by** the steps of dispensing with each flush of the toilet, a controlled amount of a heterotrophic bacteria culture into the sewage contained in the holding tank to denitrify and liquefy the sewage and holding the treated sewage a sufficient dwell time in the holding tank sufficient to achieve substantial nitrate reduction and breakdown of larger solids into smaller particles.

19. A method for treating sewage in a marine sewage treatment system including a toilet, a connection from a water source to the toilet, a holding tank for sewage having an inlet coupled to the toilet, a conduit having an inlet coupled to an outlet of said holding tank and an outlet coupled to an effluent discharge opening to the sea, and a mechanism for disinfecting the sewage in a disinfection cycle, **characterized by** the step of, immediately after disinfecting the sewage, pumping the heated sewage through a vessel containing iron powder to substantially reduce the phosphate level in said sewage before discharging the fully treated effluent overboard.

20. The method of claim 17, 18 or 19 **characterized in that**, during the sewage disinfection cycle, a macerator coupled to an inlet of the conduit is operated for a predetermined time period to macerate sewage from the holding tank and simultaneously pump the macerated sewage into the conduit.
